# EUROPÄISCHE PATENTANMELDUNG

(11) **EP 1 073 029 A2**
(43) Veröffentlichungstag der Anmeldung: **31.01.2001**
(21) Anmeldenummer: 00116359.1
(22) Anmeldetag: 28.07.2000
(51) Int. Cl.: G09B 19/06, G09B 17/00

(54) **Mittel zur visuellen Darstellung von Wörtern oder Formeln und Mittel zur akustischen Darbietung von Wörtern**

(30) Priorität: 28.07.1999 DE 19935316; 15.11.1999 DE 19954795; 11.03.2000 DE 10011995
(71) Anmelder: Wiegand, Wladimir, Dr., 52134 Herzogenaurach (DE); Wiegand, Paul, 52134 Herzogenaurach (DE)
(72) Erfinder: Wiegand, Wladimir, Dr., 52134 Herzogenaurach (DE); Wiegand, Paul, 52134 Herzogenaurach (DE)
(74) Vertreter: Bauer, Dirk, Dipl.-Ing. Dipl.-Kfm.

(57) **Zusammenfassung**

Die Erfindung betrifft Mittel zur visuellen sowie akustischen Darstellung bzw. Darbietung von Wörtern oder Formeln. Um die Erlernbarkeit der Bedeutung oder Übersetzung großer Mengen von Wörtern oder Formeln insbesondere in solchen Fällen zu erhöhen, bei denen neben der Bedeutung oder Übersetzung auch die Zugehörigkeit zu einer bestimmten Klasse oder Gruppe, insbesondere zu einem grammatikalischen Geschlecht, erlernt werden muß, wird vorgeschlagen, daß die Wörter oder Formeln in Abhängigkeit von ihrer Klassifikationszugehörigkeit eine unterschiedliche visuelle Darstellung und/ oder eine unterschiedliche akustische Darbietung besitzen, wobei sämtliche Wörter einer Klasse oder Gruppe dieselbe visuelle und/ oder akustische Darstellung bzw. Darbietung aufweisen.

## Beschreibung

Die Erfindung betrifft ein Mittel zur visuellen Darstellung von Wörtern oder Formeln. Des weiteren betrifft die Erfindung ein Mittel zur akustischen Darbietung von Wörtern.

Mittel zur visuellen Darstellung sind beispielsweise in Form von Büchern, Zeitungen und Zeitschriften allgemein bekannt. Zum Stand der Technik zählt auch die Möglichkeit, Wörter oder Formeln auf Bildschirmen, oder mit Hilfe von Projektoren auf reflektierenden Flächen darzustellen. Die Steuerung der Darstellung auf Bildschirmen erfolgt über damit verbundene Computer, sowie die darin vorhandenen Computerprogramme.

Mittel zur akustischen Darbietung von Wörtern sind insbesondere Datenträger in Form von Magnetaufzeichnungsbändern (zum Beispiel Kassetten) sowie optische Datenträger wie z. B. CD oder DVD. Die vorgenannten Datenträger können lediglich zur Wiedergabe von Informationen geeignet sein, aber auch zum Überschreiben mit neuen Informationen.

Bei der visuellen Darstellung werden unterschiedliche Darstellungsweisen von Wörtern beispielsweise dazu benutzt, um Überschriften, Absätze oder sonstige Textteile voneinander zu unterschieden, das heißt, das Layout von Druckwerken oder Bildschirmdarstellungen übersichtlich und ansprechend zu gestalten. Eine besondere Art von Mitteln zur visuellen Darstellung von Wörtern oder Formeln wird von sogenannten Lehrmitteln bzw. Auskunftsmitteln gebildet. Dabei handelt es sich beispielsweise um alle Arten von Wörterbüchern, Vokabelsammlungen, Lehrbüchern, Nachschlagewerken, Anschauungsmitteln, Lehrspielen. Diese Mittel werden zunehmen häufig nicht mehr in konventioneller körperlicher Form (Bücher, Hefte, Loseblattsammlungen), sondern in Form spezieller Software zur Benutzung mit Hilfe alternativer Darstellungseinrichtungen (Bildschirm) in Verbindung mit handelsüblichen Computern realisiert.

Ein Problem ist beispielsweise bei Wörterbüchern, die zu Übersetzungszwecken dienen und daher auch im Unterricht beim Erlernen von Fremdsprachen eingesetzt werden, darin zu sehen, daß das Einprägen des Geschlechts eines Substantivs oder der Beugungsart eines Verbs als sehr schwierig empfunden wird. So ist das Geschlecht eines Substantivs maßgeblich auch für die Deklination der mit einem Substantiv verbundenen Artikel, Adjektive, Numeralien und Pronomen. Erschwerend kommt beim Erlernen einer Fremdsprache hinzu, daß sinnidentische Wörter in der Regel nicht das selbe Geschlecht in verschiedenen Sprachen besitzen. Neben dem Erlernen der eigentlichen Übersetzung ist es somit erforderlich, sich beim Erlernen einer Fremdsprache noch das zugehörige Geschlecht eines Substantivs einzuprägen. Ähnliche Schwierigkeiten gibt es im Bereich der Biologie, beispielsweise im Hinblick auf die Zugehörigkeit einer Spezies zu einer biologischen Klasse oder Familie.

Des weiteren ist bekannt, daß ein nicht unbeträchtlicher Teil der Informationsaufnahme des Menschen auf dem Wege der Hörwahrnehmung erfolgt. Es gibt daher bereits verschiedene Lehrmittel mit hörbarer Darbietung des Lehrstoffs wie z. B. Wortschatz-, Vokabel- und Sprachtrainer, Sprachkurse oder Sammlungen von Fachwortschätzen usw. Der zu erlernende Stoff ist auf einem Speichermedium in Form von Kassetten, Disketten, CDs oder Ähnlichem gespeichert und wird mit Hilfe von geeigneten elektronischen Geräten (Kassettenrecorder, Computer, CD-Spieler) wiedergegeben. Die vorgenannten Lehrmittel dienen beispielsweise zum erlernen von Fremdsprachen oder spezieller Vokabeln verschiedenster Fachgebiete, wo das Erlernen besonders großer Mengen von Fremdwörtern oder Fachbegriffen erforderlich ist.

Ein Problem ist darin zu sehen, daß nicht nur das Einprägen eigentlicher Lautfolgen und Übersetzungen oder Bedeutungen der Fremdwörter oder Fachnamen notwendig ist, sondern oft das gleichzeitige Einprägen fester Klassifikationszugehörigkeiten dieser Wörter oder Namen. Es kann sich dabei beispielsweise um das grammatikalische Geschlecht eines fremdsprachlichen Substantivs oder die Art der Konjugation eines Verbs handeln. In allen solchen Fallen ist ein Doppeleinprägen von zwei Informationen, die zu einem Wort gehören, erforderlich. Eine solche Doppeleinprägung wird in der Regel vom Menschen als schwierig empfunden.

Der Erfindung liegt einerseits die Aufgabe zugrunde, ein Mittel zur visuellen Darstellung von Wörtern, Formeln oder sonstigen Bezeichnungen vorzuschlagen, daß das Erlernen der Zugehörigkeit einzelner Worte oder Formeln zu bestimmten Klassen oder Gruppen erleichtert.

Zum anderen liegt der Erfindung die Aufgabe zugrunde, ein Mittel zur akustischen Darbietung von zu lernenden Wörtern oder Namen vorzuschlagen, das wiederum das Einprägen der Klassifikationszugehörigkeit einzelner Worte oder Namen erleichtert.

Zum einem wird diese Aufgabe, ausgehend von einem Mittel zur visuellen Darstellung der eingangs beschriebenen Art dadurch gelöst, daß die Worte oder Formeln in Abhängigkeit von ihrer Zugehörigkeit zu einer bestimmten Klasse oder Gruppe eine unterschiedliche visuelle Darstellungsweise besitzen, wobei sämtliche Wörter einer Klasse oder Gruppe dieselbe Darstellungsweise aufweisen.

Die Erfindung macht sich insofern die Erkenntnis zu Nutze, daß die Informationsaufnahme des Menschen in sehr großem Maße auf visuellem Weg erfolgt. Dabei prägen sich im visuellen Gedächtnis des Menschen, das in der Regel sehr gut ausgebildet ist, zwei Hauptunterscheidungsmerkmale der visuellen erfaßten Objekte ein, nämlich Farbe und Form.

Beim Lesen unter Verwendung des erfindungsgemäßen Mittels nimmt die betreffende Person somit neben dem Sinngehalt eines Wortes oder einer Formel, aufgrund der besonderen visuellen Darstellungsweise (Farbe/ Form), eine weitere Information bezüglich dieses Wortes oder dieser Formel auf, nämlich die Zugehörigkeit zu einer bestimmten Klasse oder Gruppe. Die Aufnahme dieser Zusatzinformation erfolgt nicht im Wege des eigentlichen Lesevorgangs oder eines bewußten Lernvorgangs, sondern synchron und parallel hierzu, quasi über einen weiteren ebenfalls visuellen Aufnahmekanal, der zu einem unabhängigen Speicherbereich im menschlichen Gehirn führt.

Die Effizienz des Lernens mit Hilfe des erfindungsgemäßen Mittels kann daher im Vergleich mit Mitteln nach dem Stand der Technik deutlich gesteigert werden. Das Abrufen der gespeicherten Zusatzinformationen über die Klassenzugehörigkeit erfolgt im Wege von Gedankenverbindungen, das heißt Assoziationen, die automatisch und willkürlich im menschlichen Gehirn ablaufen. So wird beim Gedanken, beispielsweise an ein bestimmtes Wort, automatisch auch an dessen visuelle Darstellungsweise gedacht, in der dieses Wort beim Erfassen anhand einer Benutzung des erfindungsgemäßen Mittels in Erscheinung trat.

Gemäß einer Ausgestaltung der Erfindung ist vorgesehen, daß die Wörter in unterschiedlichen Schreibweisen (fett, kursiv, gesperrt), Schriftarten (Times New Roman, Arial, usw.) oder Schriftgrößen dargestellt sind.

Eine besonders wirksame Möglichkeit zur Steigerung der Lerneffizienz besteht darin, die Wörter in unterschiedlichen Farben darzustellen. Dies kann auch in der Art und Weise geschehen, daß die Wörter vor einem unterschiedlich farbigen Worthintergrund wiedergegeben sind.

Die Erfindung weiter ausgestaltend wird weiter vorgeschlagen, die Wörter zumindest einer Klasse oder Gruppe mit Zusatzzeichen zu versehen, die an sich nicht zu dem Wort gehören und dessen Lesbarkeit nicht beeinträchtigen. Derartige Zusatzzeichen können beispielsweise von einer - unter Umständen auch farbigen - Unterstreichung oder Einrahmung gebildet werden.

Außerdem ist es vorteilhaft, wenn die Wörter in Form einer Liste oder Spalte angeordnet sind, und Wörter unterschiedlicher Klassen in gemischter Anordnung darin enthalten sind. Das erfindungsgemäße Mittel enthält hierdurch die Ausgestaltung eines Wörterbuchs oder Vokabelbuchs in dem beispielsweise männliche Substantive blau, weibliche Substantive rot und sächliche Substantive grün dargestellt sind. Dabei kann es sich sowohl um einsprachige Wörterbücher nach Art eines DUDEN ® oder aber um Übersetzungswörterbücher, in denen fremdsprachliche Worte mit der oder den jeweiligen Übersetzungen(en) nebeneinander gestellt sind. Zusätzlich besteht die Möglichkeit, beispielsweise unregelmäßige Verben in gelber Farbe anzuzeigen, wohingegen regelmäßige Verben nicht besonders hervorgehoben sind. Die selbe Art der farbigen Darstellung von Substantiven oder Verben bietet sich natürlich auch für moderne softwaregestützte Lehrmethoden bzw. -programme in Verbindung mit Bildschirmen oder Displays aller Art an.

Um das erfindungsgemäße Mittel wie eine klassisches Wörterbuch (einsprachig oder mehrsprachig) benutzen zu können, und das Auffinden bei der Suche nach bestimmten Vokabeln zu erleichtern wird vorgeschlagen, daß die Anordnung der Worte in alphabetischer Reihenfolge erfolgt.

Gemäß einer weiteren Ausgestaltung der Erfindung besteht das Mittel zur visuellen Darstellung von Wörtern oder Formeln im wesentlichen aus in gebundener oder ungebundener Form vorliegenden Blättern aus Papier oder einem ähnlichen Material wie z. B. Kunststoffolien, die auch transparent sein können.

Eine alternative Weiterbildung der Erfindung besteht darin, daß das Mittel ein auf einem Speichermedium gespeichertes Computerprogramm ist, durch das die unterschiedliche visuelle Darstellungsweise der Wörter auf einem von dem Computerprogramm gesteuerten Darstellungsmedium bewirkt wird. In erster Linie kommt hierbei die Darstellung von Wörtern oder Formeln auf einem Computerbildschirm oder einem sonstigen Bildschirm in Betracht.

Zum anderen wird die Aufgabe, ausgehend von einem Mittel zur akustischen Darbietung, dadurch gelöst, daß die Wörter in Abhängigkeit von ihrer Zugehörigkeit zu einer bestimmten Klasse oder Gruppe eine unterschiedliche akustische Darbietungsweise besitzen, wobei sämtliche Wörter oder Namen einer Klasse oder Gruppe die selbe akustische Darbietungsweise aufweisen.

Beim Abhören der zu lernenden Stoffe unter Verwendung eines erfindungsgemäßen Mittels nimmt die betreffende Person somit neben den Lautfolgen und Übersetzungen oder Sinngehalten der Worte oder Namen aufgrund der zusätzlichen besonderen akustischen Darbietungsweise eine weitere Information bezüglich der Worte auf, nämlich die Zugehörigkeit zu einer bestimmten Klasse oder Gruppe. Die Aufnahme dieser Zusatzinformation erfolgt nicht im Wege des eigentlichen Hörvorgangs und stellt kein eigentliches aktives Erlernen dar, sondern die Aufnahme erfolgt synchron und parallel hierzu, quasi über einen weiteren, ebenfalls akustischen Aufnahmekanal, der zu einem unabhängigen Speicherbereich im menschlichen Gehirn führt. Das Abrufen der auf diese Weise gespeicherten Zusatzinformation über die Klassifikationszugehörigkeit der Wörter erfolgt im Wege von Gedankenverbindungen, das heißt Assoziationen, die unwillkürlich im menschlichen Gehirn ablaufen. So wird beispielsweise beim Gedanken an ein bestimmtes Wort automatisch auch an die akustische Darbietungsweise gedacht, in der dieses Wort beim Erfassen anhand des erfindungsgemäßen Mittels ins Bewußtsein trat.

Das erfindungsgemäße Mittel ist immer dann sinnvoll einsetzbar, wenn neben dem Einprägen beispielsweise von Übersetzungen oder Bedeutungen von Worten oder Namen gleichzeitig auch das Einprägen fester Klassifikationszugehörigkeiten erforderlich ist. Die Effizienz des Lernens mit Hilfe des erfindungsgemäßen Mittels kann im Vergleich zu Mitteln nach dem Stand der Technik deutlich gesteigert werden.

Gemäß einer Ausgestaltung der Erfindung ist vorgesehen, daß die akustische Wiedergabe einzelner Wörter in Abhängigkeit von der Klassifikationszugehörigkeit dieser Worte oder Namen mit unterschiedlichen, zusätzlichen einfachen Tönen (Einfrequenztönen) oder zusammengesetzten Mehrfrequenzklängen versehen werden. Diese zusätzlichen Töne oder Klänge können einer akustischen Wiedergabe vorangehen, nachfolgen oder gleichzeitig mit der eigentlichen sprachlichen Wiedergabe erfolgen.

Die Erfindung weiter ausgestaltend wird vorgeschlagen, daß die eigentliche akustische Wiedergabe einzelner Wörter in Abhängigkeit von der Zugehörigkeit diese Wörter zu einer bestimmten Klasse oder Gruppe in unterschiedlichen Klangfarben erfolgen zu lassen.

Eine besondere Möglichkeit zur Steigerung der Lerneffizienz, insbesondere der Genuszugehörigkeit der Substantive von Fremdsprachen, besteht darin, eine natürliche und deswegen wirkungsvolle Form der klangfarbigen Darstellung der Substantive bei hörbarer Darbietung anzuwenden, nämlich verschiedene menschliche Stimmen, die voneinander leicht unterscheidbar sind. So kann beispielsweise zur akustischen Wiedergabe von Substantiven mit männlichem Geschlecht eine typisch männliche Stimme, zur Wiedergabe weiblicher Substantive eine weibliche Stimme und zur Wiedergabe sächlicher Substantive eine typisch kindliche Stimme erfolgen.

Ein besonders großer Lernerfolg kann erzielt werden, wenn das erfindungsgemäße Mittel zur visuellen Darstellung von Wörtern oder Formeln mit dem ebenfalls erfindungsgemäß vorgeschlagenen Mittel zur akustischen Darbietung von Wörtern kombiniert angewendet wird. So kann insbesondere bei Sprachprogrammen zum Erlernen von Fremdsprachen die Darstellung von Substantiven in Abhängigkeit von ihrem grammatikalischen Geschlecht in unterschiedlichen Farben erfolgen, wobei die Worte im Rahmen einer zusätzlichen akustischen Darbietung je nach ihrer Genuszugehörigkeit von typisch männlichen, weiblichen oder kindlichen Stimmen wiedergegeben werden. Solche Sprachprogramme sind insbesondere in Verbindung mit Computern und zugehörigen Bildschirmen und Lautsprechern nutzbar.

## Patentansprüche

1. Mittel zur visuellen Darstellung von Wörtern oder Formeln, dadurch gekennzeichnet, daß die Wörter oder Formeln in Abhängigkeit von ihrer Zugehörigkeit zu einer bestimmten Klasse oder Gruppe eine unterschiedliche visuelle Darstellungsweise besitzen, wobei sämtliche Wörter einer Klasse oder Gruppe dieselbe visuelle Darstellungsweise aufweisen.

2. Mittel nach Anspruch 1, dadurch gekennzeichnet, daß die Wörter in unterschiedlichen Schreibweisen und/oder Schriftarten und/oder Schriftgrößen dargestellt sind.

3. Mittel nach Anspruch 1 oder 2, dadurch gekennzeichnet, daß die Wörter in unterschiedlichen Farben dargestellt und/ oder vor einem unterschiedlichen Worthintergrund wiedergegeben sind.

4. Mittel nach einem der Ansprüche 1 bis 3, dadurch gekennzeichnet, daß die Wörter in Form einer Liste angeordnet sind, und Wörter unterschiedlicher Klassen oder Gruppen in gemischter Anordnung darin enthalten sind.

5. Mittel nach einem der Ansprüche 1 bis 4, dadurch gekennzeichnet, daß die Anordnung der Wörter in alphabetischer Reihenfolge erfolgt.

6. Mittel nach einem der Ansprüche 1 bis 5, dadurch gekennzeichnet, daß die Wörter zumindest einer Klasse oder Gruppe mit Zusatzzeichen versehen sind, die an sich nicht zu dem Wort gehören und dessen Lesbarkeit nicht beeinträchtigen.

7. Mittel nach einem der Ansprüche 1 bis 6, dadurch gekennzeichnet, das es in Form eines Wörterbuchs, Vokabelhefts oder Lehrbuchs ausgeführt ist.

8. Mittel nach einem der Ansprüche 1 bis 6, dadurch gekennzeichnet, daß es ein auf einem Speichermedium gespeichertes Computerprogramm ist, durch das die unterschiedliche visuelle Darstellungsweise der Wörter auf einem von dem Computerprogramm gesteuerten Darstellungsmedium bewirkt wird.

9. Mittel nach einem der Ansprüche 1 bis 8, dadurch gekennzeichnet, daß spaltenweise die mit ihrer Übersetzung oder Bedeutung zu erlernenden Wörter und die zugehörigen Übersetzungen oder Bedeutungen nebeneinander angeordnet sind.

10. Mittel zur akustischen Darbietung von Wörtern, dadurch gekennzeichnet, daß die Wörter in Abhängigkeit von ihrer Zugehörigkeit zu einer bestimmten Klasse oder Gruppe eine unterschiedliche akustische Darbietungsweise besitzen, wobei sämtliche Wörter einer Klasse oder Gruppe dieselbe akustische Darstellungsweise aufweisen.

11. Mittel nach Anspruch 10, dadurch gekennzeichnet, daß die akustische Wiedergabe einzelner Wörter in Abhängigkeit von der Klassifikationszugehörigkeit mit unterschiedlichen zusätzlichen Einfrequenztönen oder zusammengesetzten Mehrfrequenzklängen versehen ist, wobei diese zusätzlichen Töne oder Klänge der akustischen Wiedergabe der Wörter vorangehen oder nachfolgen oder gleichzeitig mit der eigentlichen sprachlichen Wiedergabe dargeboten werden.

12. Mittel nach Anspruch 10 oder 11, dadurch gekennzeichnet, daß die akustische Wiedergabe der Wörter in Abhängigkeit von der Klassifikationszugehörigkeit in unterschiedlichen Klangfarben erfolgt.

13. Mittel nach einem der Ansprüche 10 bis 12, dadurch gekennzeichnet, daß die akustische Wiedergabe von Substantiven in Abhängigkeit von ihrem grammatikalischen Geschlecht durch eine typisch weibliche, männliche oder kindliche Stimme erfolgt.

14. Mittel nach einem oder mehreren der Ansprüche 1 bis 13, dadurch gekennzeichnet, daß die Wörter oder Formeln in Abhängigkeit von ihrer Zugehörigkeit zu einer bestimmten Klasse oder Gruppe sowohl eine unterschiedliche visuelle Darstellungsweise als auch eine unterschiedliche akustische Darbietungsweise besitzen, wobei sämtliche Wörter oder Formeln einer Klasse oder Gruppe ein und dieselbe visuelle Darstellung sowie ein und dieselbe akustische Darbietung aufweisen.
